# FASCICULE DE BREVET EUROPEEN

(11) **EP 3 953 310 B1**
(45) Date de publication et mention de la délivrance du brevet: **30.11.2022**
(21) Numéro de dépôt: 20718296.5
(22) Date de dépôt: 08.04.2020
(51) Int. Cl.: C03B 7/084, C03B 7/086, C03B 7/088

(54) **ENSEMBLE CUVETTE D'AVANT-CORPS D'UN CANAL DE DISTRIBUTION DE VERRE**
VORHERDWANNENANORDNUNG FÜR EINEN GLASVERTEILUNGSKANAL
FOREHEARTH TANK ASSEMBLY FOR A GLASS DISTRIBUTION CHANNEL

(30) Priorité: 11.04.2019 FR 1903865
(43) Date de publication de la demande: 16.02.2022
(73) Titulaire: Société Européenne des Produits Réfractaires, 92400 Courbevoie (FR)
(72) Inventeur: FOURNIER, Patrice, 30133 LES ANGLES (FR)
(74) Mandataire: Nony
(86) Numéro de dépôt international: PCT/EP2020/060091
(87) Numéro de publication internationale: WO 2020/208107

(56) Documents cités:
- EP-A1- 1 599 424
- FR-A- 625 493
- NL-A- 6 505 096

## Description

### Domaine technique

L'invention concerne un ensemble cuvette d'avant-corps d'un canal de distribution de verre destiné à la formation de paraisons de verre en fusion.

### Technique antérieure

Dans la fabrication d'articles en verre tels que bouteilles, gobelets, flacons, généralement appelés « verre creux », une composition adéquate est fondue dans un four de fusion de manière à obtenir un verre en fusion. Le verre en fusion est amené, par des canaux de distribution (« feeders » en anglais), du four jusqu'aux machines de formage qui vont former les articles.

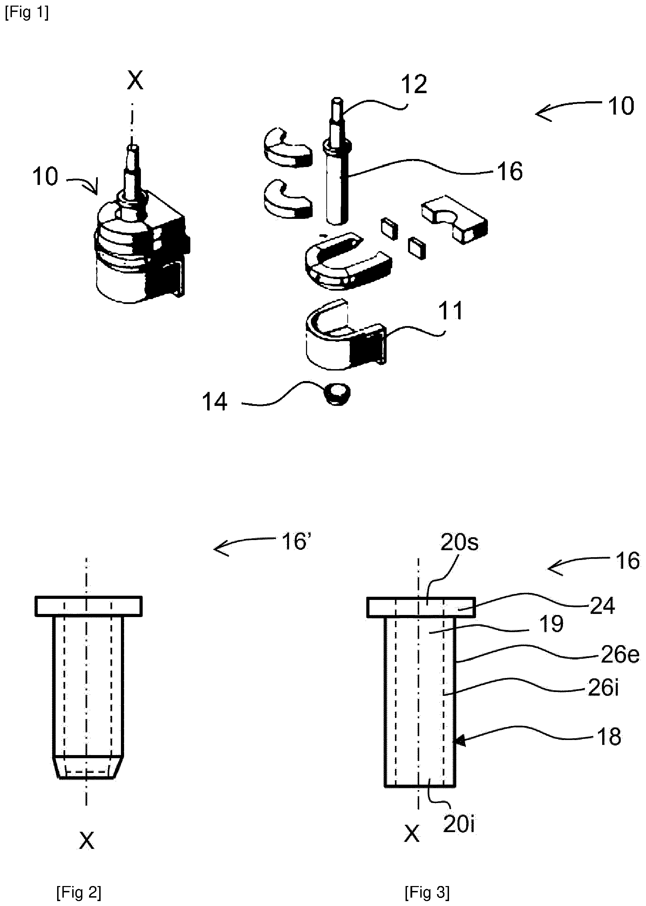

Un canal de distribution se termine par un ensemble cuvette d'avant-corps (« spout assembly » en anglais, ou « partie terminale de canal de distribution de verre »). Comme représenté schématiquement sur la figure 1, un ensemble cuvette d'avant-corps 10 comporte classiquement
- une cuvette d'avant-corps 11 (« spout » en anglais) ;
- une rondelle d'écoulement 14 (« orifice ring » en anglais) ;
- un plongeur 12 (« plunger » en anglais), présentant un mouvement ascendant et descendant afin de retenir ou de refouler le verre en fusion à travers la rondelle d'écoulement 14 pour former la paraison,
- une chemise 16, généralement tournante, dont la position en hauteur est réglable, notamment pour bloquer l'arrivée du verre en fusion jusqu'à la rondelle d'écoulement afin de pouvoir la remplacer.

Les paraisons formées au moyen de l'ensemble cuvette d'avant-corps sont classiquement distribuées jusqu'aux machines de formage à l'aide de glissières.

La figure 2 représente schématiquement, en coupe longitudinale, deux exemples de chemises habituelles. La chemise 16 de l'image de droite, d'axe X, comporte classiquement
- un manchon 18 cylindrique d'axe X, classiquement vertical, de section circulaire, dont la lumière 19 débouche à ses extrémités supérieure et inférieure par des ouvertures supérieure 20s et inférieure 20i, respectivement, et
- à l'extrémité supérieure du manchon, un rebord transversal 24.

Le manchon 18 est défini extérieurement par une surface latérale radialement extérieure 26e, et intérieurement par une surface latérale radialement intérieure 26i.

L'extrémité inférieure du manchon peut être biseautée, comme dans la chemise 16' du mode de réalisation de l'image de gauche de la figure 2, habituellement appelée "chemise pour technologie dite « Metering System ».

La lumière 19 du manchon permet le coulissement vertical d'un plongeur 12, tel que celui représenté sur la figure 3. Le plongeur, d'axe Y₁, peut présenter un corps de forme cylindrique, généralement de révolution ou conique. L'extrémité inférieure du plongeur peut en particulier présenter la forme d'une demi-sphère ou être plate.

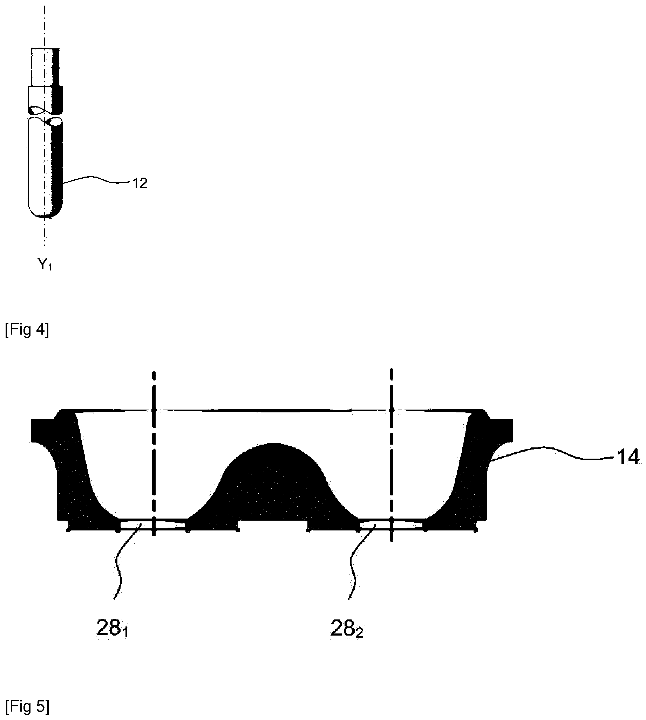

La figure 4 est une représentation schématique en coupe d'une rondelle d'écoulement 14 à deux orifices 28₁ et 28₂.

La chemise est un élément critique. En particulier, une casse de la chemise impose un long arrêt pour réparer la ligne de production.

Il existe un besoin permanent pour augmenter la durée entre deux remplacements de chemise.

Le but de l'invention est de satisfaire, au moins partiellement, ce besoin.

EP 1 599 424 (ou US 2006/0213226) décrit un ensemble cuvette d'avant-corps d'un canal de distribution de verre. Deux plongeurs sont disposés dans la chemise. La surface intérieure de la chemise ne comporte pas de protubérances.

FR 625 493 et NL 6 505 096 décrivent chacun un ensemble cuvette d'avant-corps qui ne comporte qu'un unique plongeur et qu'un unique orifice de sortie.

### Exposé de l'invention

### Résumé de l'invention

L'invention concerne ainsi un ensemble cuvette d'avant-corps d'un canal de distribution de verre, ledit ensemble comportant une unique chemise, dite « chemise rainurée », au moins deux plongeurs, et une unique rondelle d'écoulement, lesdits plongeurs étant disposés, au moins partiellement, dans la chemise, plus de trois rainures étant ménagées à la surface intérieure de ladite chemise et comportant chacune, dans une partie inférieure de la chemise destinée à être en contact avec du verre en fusion, une portion inférieure s'étendant sur plus de 10% de la longueur de ladite partie inférieure et présentant une longueur, mesurée en suivant la rainure, supérieure à 0,1 fois et de préférence inférieure à deux fois la longueur de ladite partie inférieure, la longueur de ladite partie inférieure étant mesurée selon l'axe (X) de ladite chemise.

Les inventeurs ont en effet découvert, tout à fait par hasard, que de telles rainures permettent, de manière inattendue, d'augmenter la durée de vie de la chemise, et donc d'augmenter la durée avant son remplacement.

L'invention concerne également une dite chemise rainurée conformée pour un ensemble cuvette d'avant-corps selon l'invention. Dans un mode de réalisation, le diamètre intérieur D de la chemise est supérieur à 12 cm.

Dans un ensemble cuvette d'avant-corps selon l'invention ou indépendamment d'un tel ensemble, une chemise rainurée peut encore comporter une ou plusieurs des caractéristiques optionnelles suivantes :
- la partie inférieure de la chemise s'étend sur plus de 15%, de préférence sur plus de 20%, de préférence sur plus de 25% et/ou sur moins de 70%, de préférence sur moins de 65%, de préférence sur moins de 60% de la longueur de la chemise ;
- la portion inférieure d'une dite rainure, de préférence une dite rainure quelconque, s'étend sur plus de 20%, de préférence plus de 30%, de préférence plus de 40%, de préférence plus de 50%, de préférence plus de 70%, de préférence plus de 80%, de préférence plus de 90%, de préférence sensiblement 100% de la longueur de la partie inférieure de la chemise ;
- la portion inférieure d'une dite rainure, de préférence d'une dite rainure quelconque présente une longueur, mesurée en suivant la rainure, inférieure à 2 fois, de préférence inférieure à 1,8 fois, de préférence inférieure à 1,6 fois, de préférence inférieure à 1,4 fois la longueur de la partie inférieure de la chemise, et/ou supérieure à 0,1 fois, de préférence supérieure à 0,2 fois, de préférence supérieure à 0,3 fois, de préférence supérieure à 0,4 fois, de préférence supérieure à 0,5 fois, de préférence supérieure à 0,7 fois, de préférence supérieure à 0,8 fois, de préférence supérieure à 0,9 fois, de préférence supérieure à 1,0 fois, voire supérieure à 1,1 fois la longueur de la partie inférieure de la chemise ;
- une dite rainure, de préférence une dite rainure quelconque, s'étend sur plus de 2%, de préférence sur plus de 4%, de préférence sur plus de 6%, de préférence sur plus de 8%, de préférence sur plus de 10%, de préférence sur plus de 15%, de préférence sur plus de 20%, de préférence sur plus de 25%, de préférence sur plus de 30%, de préférence sur plus de 35%, de préférence sur plus de 40%, de préférence sur plus de 45%, de préférence sur plus de 50%, de préférence sur plus de 55%, de préférence sur plus de 60%, de préférence sur plus de 65%, de préférence sur plus de 70%, de préférence sur plus de 75%, de préférence sur plus de 80%, de préférence sur plus de 85%, de préférence sur plus de 90%, de préférence sur plus de 95%, de préférence sur sensiblement 100% de la longueur de la chemise ;
- une dite rainure, de préférence une dite rainure quelconque présente une longueur, mesurée en suivant la rainure, inférieure à 2 fois, de préférence inférieure à 1,8 fois, de préférence inférieure à 1,6 fois, de préférence inférieure à 1,4 fois la longueur de la chemise, et/ou de préférence supérieure à 0,02 fois, de préférence supérieure à 0,04 fois, de préférence supérieure à 0,06 fois, de préférence supérieure à 0,08 fois, de préférence supérieure à 0,1 fois, de préférence supérieure à 0,15 fois, de préférence supérieure à 0,2 fois, de préférence supérieure à 0,25 fois, de préférence supérieure à 0,3 fois, de préférence supérieure à 0,35 fois, de préférence supérieure à 0,4 fois, de préférence supérieure à 0,45 fois, de préférence supérieure à 0,5 fois, de préférence supérieure à 0,55 fois, de préférence supérieure à 0,6 fois, de préférence supérieure à 0,65 fois, de préférence supérieure à 0,7 fois, de préférence supérieure à 0,75 fois, de préférence supérieure à 0,8 fois, de préférence supérieure à 0,85 fois, de préférence supérieure à 0,9 fois, de préférence supérieure à 0,95 fois, de préférence supérieure à 1 fois la longueur de la chemise ;
- le nombre desdites rainures sur la surface intérieure est inférieur ou égal à (0,057*D + 4,05) et supérieur ou égal à (0,048*D - 2,43), D étant le diamètre de l'ouverture supérieure de la chemise, en mm ;
- le nombre de dites rainures est de préférence supérieur ou égal à 8, voire supérieur à 10, voire supérieur à 12, voire supérieur à 15 ;
- la profondeur minimale de chaque dite rainure est supérieure à 2 mm, de préférence supérieure à 3 mm, de préférence supérieure à 4 mm et/ou inférieure à 10 mm, de préférence inférieure à 9 mm, de préférence inférieure à 8 mm, de préférence inférieure à 7 mm, au moins dans la partie inférieure de la chemise, de préférence sur toute la longueur de la rainure ;
- la différence entre la profondeur maximale et la profondeur minimale d'une dite rainure quelconque est inférieure à 4 mm, de préférence inférieure à 3 mm, de préférence inférieure à 1 mm, au moins dans la partie inférieure de la chemise, de préférence sur toute la longueur de la rainure ;
- la profondeur de chaque dites rainures est constante, au moins dans la partie inférieure de la chemise, de préférence sur toute la longueur de la rainure ;
- la largeur maximale d'une rainure, de préférence d'une rainure quelconque, est supérieure à 10 mm, de préférence supérieure à 15 mm et/ou inférieure à 30 mm, de préférence inférieure à 25 mm, au moins dans la partie inférieure de la chemise, de préférence sur toute la longueur de la rainure ;
- la largeur moyenne d'une rainure, de préférence d'une rainure quelconque, est supérieure à 10 mm, de préférence supérieure à 15 mm et/ou inférieure à 30 mm, de préférence inférieure à 25 mm, au moins dans la partie inférieure de la chemise, de préférence sur toute la longueur de la rainure ;
- la différence entre la largeur minimale et la largeur maximale d'une rainure, de préférence d'une rainure quelconque, est inférieure à 5 mm, de préférence inférieure à 4 mm, de préférence inférieure à 2 mm, au moins dans la partie inférieure de la chemise, de préférence sur toute la longueur de la rainure ;
- de préférence, toutes les rainures présentent sensiblement la même largeur, au moins dans la partie inférieure de la chemise, de préférence sur toute la longueur de la rainure ;
- toutes lesdites rainures présentent une forme identique ;
- les rainures s'étendent sensiblement parallèlement les unes aux autres ;
- dans un mode de réalisation, la direction d'une rainure en un point quelconque de ladite rainure forme, avec l'axe de la chemise, un angle θ inférieur à 10°, inférieur à 5°, de préférence inférieur à 2°, au moins dans la partie inférieure de la chemise, de préférence sur toute la longueur de la rainure ;
- dans un mode de réalisation, la direction d'une rainure en un point quelconque de ladite rainure forme, avec l'axe de la chemise, un angle θ supérieur à 5°, de préférence supérieur à 6°, de préférence supérieur à 7° et/ou inférieur à 30°, de préférence inférieur à 28°, de préférence inférieur à 26°, de préférence inférieur à 25°, au moins dans la partie inférieure de la chemise, de préférence sur toute la longueur de la rainure ;
- la chemise comporte une collerette à une extrémité supérieure, et/ou présente une forme extérieure conique à une extrémité inférieure ;
- la chemise est en un matériau fritté ou fondu, de préférence fritté ;
- la surface intérieure de la chemise présente une forme générale (c'est-à-dire en faisant abstraction des rainures) cylindrique, de préférence de section circulaire ;
- la chemise est mobile en translation, de préférence en translation verticale ;
- la chemise est en un matériau céramique.

Un ensemble cuvette d'avant-corps selon l'invention peut également comporter une ou plusieurs des caractéristiques optionnelles suivantes :
- le nombre de plongeurs est supérieur ou égal à 3 et/ou inférieur ou égal à 4 ;
- dans un mode de réalisation, le nombre de plongeurs est égal à 2 ;
- la rondelle d'écoulement présente un nombre d'orifices égal au nombre de plongeurs. Dans ce mode de réalisation, l'extrémité inférieure de chaque plongeur fait face à un orifice de la rondelle d'écoulement respectif.
- dans un mode de réalisation, l'ensemble cuvette d'avant-corps comporte des premier et deuxième plongeurs, et l'extrémité inférieure des premier et deuxième plongeurs fait face à des premier et deuxième orifices de la rondelle d'écoulement respectivement, de préférence lesdits premier et deuxième plongeurs sont disposés coaxialement aux premier et deuxième orifices de la rondelle d'écoulement, respectivement.

L'invention concerne aussi un four de fabrication d'articles creux en verre, en particulier en un verre sodocalcique, borosilicate, opal au fluor, ou cristal, ledit four comportant une chemise rainurée selon l'invention et/ou un ensemble cuvette d'avant corps selon l'invention.

Dans un ensemble cuvette d'avant-corps selon l'invention, le niveau du verre en fusion définit la limite entre les parties inférieure et supérieure de la chemise, et donc entre les portions inférieure et supérieure de chaque rainure.

Les articles de verre fabriqués peuvent être notamment des bouteilles, des verres, des pots, et plus généralement tout récipient apte à contenir un liquide, une crème ou une pâte.

L'invention concerne encore un procédé de fabrication d'une chemise d'un ensemble cuvette d'avant-corps selon l'invention, procédé dans lequel, pour augmenter la durée de vie de ladite chemise, on ménage, à la surface intérieure de ladite chemise, plus de trois rainures comportant chacune, dans une partie inférieure de la chemise destinée à être en contact avec du verre en fusion, une portion inférieure s'étendant sur plus de 10% de la longueur de ladite partie inférieure et présentant une longueur, mesurée en suivant la rainure, supérieure à 0,1 fois et de préférence inférieure à deux fois la longueur de ladite partie inférieure, la longueur de ladite partie inférieure étant mesurée selon l'axe (X) de ladite chemise.

### Définitions

Sauf indication contraire, la longueur d'une rainure est sa longueur mesurée en suivant la courbe de la rainure.

La longueur de la chemise est mesurée selon son axe X, entre ses extrémités inférieure et supérieure. Il en est de même pour la partie inférieure de la chemise.

Une rainure « s'étend » sur plus de x% de la longueur de la chemise lorsque la longueur de la rainure, mesurée selon l'axe X, est supérieure à x% de la longueur de la chemise.

L'angle entre deux directions est l'angle entre deux plans perpendiculaires à ces deux directions, respectivement.

Un plongeur est « disposé dans une chemise » lorsqu'en service, il coopère avec cette chemise pour la formation de paraisons.

Dans la présente description, les adjectifs "inférieur", "supérieur", "horizontal", "vertical", etc. sont définis par rapport à la position de service, comme représenté sur les figures, où V est la direction verticale.

Sauf indication contraire, « comporter », « comprendre », ou « présenter » doivent être interprétés de manière large, non limitative.

### Brève description des dessins

D'autres caractéristiques et avantages de l'invention apparaîtront encore à la lecture de la description détaillée qui va suivre et à l'examen du dessin annexé dans lequel
- [Fig 1] la figure 1, décrite en préambule, représente schématiquement un ensemble cuvette d'avant-corps conventionnel, assemblé sur l'image de gauche et en vue éclatée sur l'image de droite ;
- [Fig 2] la figure 2 représente schématiquement, en coupe longitudinale, deux exemples de chemises habituelles ;
- [Fig 3] la figure 3 représente schématiquement, en vue de face, un exemple de plongeur à bout rond ;
- [Fig 4] la figure 4 représente schématiquement, en coupe longitudinale, un exemple de rondelle d'écoulement à deux orifices ;
- [Fig 5] la figure 5 représente schématiquement, en coupe longitudinale et en position de service, un exemple d'ensemble cuvette d'avant-corps selon l'invention, dans un mode de réalisation préféré, l'image en bas à droite représentant schématiquement une coupe transversale de deux rainures ;
- [Fig 6] la figure 6 représente schématiquement, en vue de face (image inférieure de gauche), en coupe longitudinale (image inférieure de droite) et vue de dessous (image supérieure de gauche), la chemise rainurée de l'ensemble cuvette d'avant-corps de la figure 5. L'image supérieure de droite représente schématiquement une coupe transversale de deux rainures.

Des références identiques sont utilisées pour désigner des organes identiques ou analogues.

### Description détaillée

### Chemise

Les figures 1 à 4 ayant été décrites en préambule, on se reporte à la figure 5.

Cette figure représente un ensemble cuvette d'avant-corps 10 comportant
- une cuvette d'avant-corps 11 ;
- une rondelle d'écoulement 14 comportant des premier et deuxième orifices 28₁ et 28₂ ;
- des premier et deuxième plongeurs 12₁ et 12₂, d'axes Y₁ et Y₂ verticaux, respectivement, présentant des première et deuxième extrémités inférieures 13₁ et 13₂, respectivement, faisant face aux premier et deuxième orifices 28₁ et 28₂, respectivement ;
- une chemise rainurée 50 selon l'invention, dans un mode de réalisation préféré.

La chemise 50 comporte classiquement
- un manchon 18 cylindrique d'axe X, classiquement vertical, de préférence de section circulaire, dont la lumière 19 débouche à ses extrémités supérieure et inférieure par des ouvertures supérieure 20s et inférieure 20i, respectivement, et
- à l'extrémité supérieure du manchon, un rebord transversal 24, ou « collerette ».

Le manchon 18 est défini extérieurement par une surface latérale radialement extérieure, ou « surface extérieure » 26e, et intérieurement par une surface latérale radialement intérieure, ou « surface intérieure » 26i. L'extrémité inférieure du manchon peut être biseautée.

En service, seule une partie de la chemise 50, dite « partie inférieure » 50i, est en contact avec le verre en fusion. La partie supérieure de la chemise 50s n'entre pas en contact avec le verre en fusion. Le niveau N du verre en fusion, représenté en trait interrompu sur la figure 5, est défini par les conditions nominales de l'utilisation de l'assemblage cuvette d'avant-corps, prédéfinies. La limite entre les parties inférieure et supérieure de la chemise est donc claire pour l'homme du métier. Elle dépend notamment du modèle de cuvette d'avant-corps, et en particulier de la hauteur de celle-ci. En conditions nominales d'utilisation, le niveau du verre en fusion est en général situé entre 2,5 et 4 cm en dessous de la face supérieure 60 de la cuvette d'avant-corps, et le chant inférieur 53i de la chemise se trouve en général 1,5 à 2,5 cm au-dessus du fond 62 de la cuvette d'avant-corps.

La partie inférieure de la chemise s'étend typiquement sur plus de 15%, de préférence plus de 20%, de préférence plus de 25% et moins de 70%, de préférence moins de 65%, de préférence moins de 60% de la longueur de la chemise.

Le manchon 18 présente de préférence une épaisseur e₁₈ supérieure à 18 mm et inférieure à 40 mm, de préférence inférieure à 35 mm, de préférence inférieure à 27 mm.

Selon l'invention, la surface intérieure 26i comporte une pluralité de rainures 52.

Une rainure 52, de préférence une rainure 52 quelconque, présente la forme d'une hélice régulière. La tangente en tout point de l'hélice forme un angle θ constant avec une droite verticale passant par ce point. L'angle θ est de préférence supérieur à 5°, de préférence supérieur à 6°, de préférence supérieur à 7° et/ou inférieur à 30°, de préférence inférieur à 28°, de préférence inférieur à 26°, de préférence inférieur à 25°. Sur la figure, il est de 9°.

De préférence, une rainure 52, de préférence une rainure 52 quelconque, fait moins de 0,8 tour, de préférence moins de 0,5 tour, de préférence moins de 0,4 tour autour de l'axe X.

Une rainure 52, de préférence une rainure 52 quelconque, s'étend sur plus de 2%, de préférence sur plus de 4%, de préférence sur plus de 6%, de préférence sur plus de 8%, de préférence sur plus de 10%, de préférence sur plus de 15%, de préférence sur plus de 20%, de préférence sur plus de 25%, de préférence sur plus de 30%, de préférence sur plus de 35%, de préférence sur plus de 40%, de préférence sur plus de 45%, de préférence sur plus de 50%, de préférence sur plus de 55%, de préférence sur plus de 60%, de préférence sur plus de 65%, de préférence sur plus de 70%, de préférence sur plus de 75%, de préférence sur plus de 80%, de préférence sur plus de 85%, de préférence sur plus de 90%, de préférence sur plus de 95%, de préférence sur sensiblement 100% (comme sur la figure 5) de la longueur L₅₀ de la chemise, mesurée selon l'axe X.

Chaque rainure 52 comporte, dans la partie inférieure de la chemise, une portion inférieure 52i destinée, en service, à entrer en contact avec du verre en fusion, et peut comporter, dans la partie supérieure de la chemise, une portion supérieure 52s complémentaire, qui prolonge la portion inférieure vers le haut de la chemise 50.

De préférence, la profondeur, ou « hauteur » h₅₂, de la portion inférieure d'une rainure 52, de préférence d'une rainure 52 quelconque, est constante. De préférence, elle est supérieure à 2 mm, de préférence supérieure à 3 mm, de préférence supérieure à 4 mm et/ou inférieure à 10 mm, de préférence inférieure à 9 mm, de préférence inférieure à 8 mm, de préférence inférieure à 7 mm. De préférence, la largeur l₅₂ d'une rainure 52, mesurée à son ouverture, de préférence constante, est supérieure à 10 mm, de préférence supérieure à 15 mm et/ou inférieure à 30 mm, de préférence inférieure à 25 mm.

De préférence, la portion inférieure d'une rainure 52 est peu profonde au regard de sa largeur. De préférence, le rapport h₅₂/l₅₂ de la portion inférieure d'une rainure 52, de préférence d'une rainure 52 quelconque, est inférieur à 0,5, de préférence inférieur à 0,4, de préférence inférieur à 0,3 et/ou supérieur à 0,1, de préférence supérieur à 0,2.

Le profil transversal de la portion inférieure d'une rainure 52, de préférence d'une rainure 52 quelconque, c'est-à-dire dans un plan de coupe perpendiculaire à son axe, comme sur l'image inférieure droite de la figure 5, est de préférence symétrique. De préférence, le profil est convergent depuis l'ouverture 54 de la rainure jusqu'à son fond 56. L'absence de contre-dépouille facilite avantageusement le démoulage de la chemise lors de sa fabrication. De préférence, le profil est dépourvu d'arêtes ou de cornières. De préférence, le rayon de courbure minimal R est supérieur à 3 mm, de préférence supérieur à 4 mm.

La largeur et/ou la profondeur et/ou le profil de la portion supérieure 52s d'une rainure, de préférence d'une rainure quelconque, sont de préférence identiques à ceux de la portion inférieure 52i qu'elle prolonge (lorsqu'une telle la portion supérieure 52s est présente). De préférence, une rainure 52, de préférence une rainure 52 quelconque, débouche sur le chant inférieur 53i et, de préférence encore, sur le chant supérieur 53s de la chemise 50. La fabrication de la chemise en est facilitée.

La densité des rainures est de préférence élevée. De préférence, le rapport de l'aire totale des ouvertures des rainures sur l'aire de la surface intérieure 26i est supérieur à 20%, de préférence supérieur à 30%, voire supérieur à 35%, et/ou inférieur à 70%, de préférence inférieur à 70%, de préférence inférieur à 60%, de préférence inférieur à 50%, voire inférieur à 40%.

Le nombre de rainures sur la surface intérieure est de préférence inférieur ou égal à (0,057*D + 4,05) et/ou supérieur ou égal à (0,048*D - 2,43), D étant le diamètre de l'ouverture supérieure 58 de la chemise, en mm.

Par exemple, une chemise présentant un diamètre D égal à 254 mm comporte de préférence au moins 0,048*254-2,43=9,762, soit au moins 10 rainures et de préférence moins de 0,057*254+4,05=18,528, soit 18 rainures ou moins.

Le nombre de rainures 52 est de préférence supérieur ou égal à 8, voire supérieur à 10, voire supérieur à 12, voire supérieur à 15 et/ou inférieur à 30, de préférence inférieur à 25.

De préférence, les rainures 52 sont régulièrement réparties sur la surface intérieure 26i.

La profondeur et/ou la largeur et/ou la longueur d'une rainure peuvent être identiques ou différentes de celles des autres rainures.

De préférence, toutes les rainures 52 sont identiques.

De préférence, toutes les rainures 52 s'étendent parallèlement les unes aux autres.

Les techniques conventionnelles peuvent être utilisées pour fabriquer une chemise rainurée.

La chemise est de préférence en un matériau céramique, optionnellement, au moins en partie, revêtu d'un revêtement, de préférence de platine.

Ladite chemise comporte de préférence plus de 95%, de préférence plus de 98%, de préférence plus de 99%, de préférence sensiblement 100% d'oxydes, sur la base de la masse de la chemise.

Ladite chemise présente de préférence une composition telle que la teneur totale Al₂O₃ + ZrO₂ + SiO₂ + CaO est supérieure à 90%, de préférence supérieure à 95%, de préférence supérieure à 98%, de préférence supérieure à 99%, en pourcentage massique sur la base des oxydes.

Dans un premier mode de réalisation particulier, ladite chemise présente une teneur totale Al₂O₃ + SiO₂ + CaO supérieure à 90%, de préférence supérieure à 95%, de préférence supérieure à 98%, de préférence supérieure à 99%, en pourcentage massique sur la base des oxydes. Dans ledit premier mode de réalisation, la teneur Al₂O₃ est de préférence supérieure à 80%, de préférence supérieure à 85%, de préférence supérieure à 90%, en pourcentage massique sur la base des oxydes.

Dans un deuxième mode de réalisation particulier, ladite chemise présente une teneur totale Al₂O₃ + ZrO₂ + SiO₂ + CaO supérieure à 90%, de préférence supérieure à 95%, de préférence supérieure à 98%, de préférence supérieure à 99%, en pourcentage massique sur la base des oxydes. Ladite chemise peut en particulier présenter la composition suivante, sur la base de la masse des oxydes et pour un total de 100% :
- Al₂O₃ < 85%, voire Al₂O₃ < 80% et, de préférence Al₂O₃ > 45%, voire Al₂O₃ > 50%, voire Al₂O₃ > 60%,
- SiO₂ < 25%, voire SiO₂ < 20% et, de préférence SiO₂ > 5 %, voire SiO₂ > 10%,
- ZrO₂ < 45%, voire ZrO₂ < 35%, voire ZrO₂ < 30%, voire ZrO₂ < 25%, voire ZrO₂ < 21%, voire ZrO₂ < 17%, voire ZrO₂ < 13%, et de préférence ZrO₂ > 8%, voire ZrO₂ > 10%,
- CaO < 5%, de préférence CaO < 4%, de préférence CaO < 3%, de préférence CaO < 2% et,
- autres oxydes < 5%, de préférence < 3%.

La chemise est de préférence mise en forme par coulage d'une matière moulable dans un moule.

La matière moulable peut être un liquide en fusion, le refroidissement conduisant à une chemise en un matériau fondu.

Alternativement, la matière moulable peut être une barbotine ou un béton, le durcissement pouvant résulter de l'action du moule, par exemple en plâtre et/ou du composé provoquant la prise, de manière à obtenir une chemise crue. De préférence, la chemise crue est frittée préalablement à sa mise en service. La chemise crue peut également être frittée *in situ* lors de son utilisation.

De préférence, les rainures sont données par la forme du moule. Alternativement, elles peuvent être usinées sur la pièce obtenue après moulage ou après durcissement.

En service, dans un mode de réalisation, la chemise rainurée tourne autour de son axe X.

### Exemples

Les exemples non limitatifs suivants sont donnés dans le but d'illustrer l'invention.

On fabrique des ensembles cuvette d'avant-corps comportant chacun une cuvette d'avant-corps conforme au repère 503-5080, deux plongeurs conformes au repère 501-6313, une rondelle d'écoulement conforme au repère 503-5742 et :
- une chemise conforme au repère 503-5741 pour l'ensemble cuvette d'avant-corps de l'exemple comparatif 1,
- une chemise conforme au repère 503-5741, sur la surface intérieure de laquelle sont ménagées 14 rainures identiques, de largeur égale à 20 mm et de profondeur égale à 5 mm, inclinées d'un angle θ égal à 9° par rapport à l'axe X, et s'étendant sur toute la longueur de la chemise, le profil desdites rainures présentant un rayon de courbure minimal de 5 mm, pour l'ensemble cuvette d'avant-corps de l'exemple 2 selon l'invention,
lesdits repères étant définis dans le catalogue des produits consommables SEFPRO disponible à l'adresse suivante : https://www.sefpro.com/products/expendables.

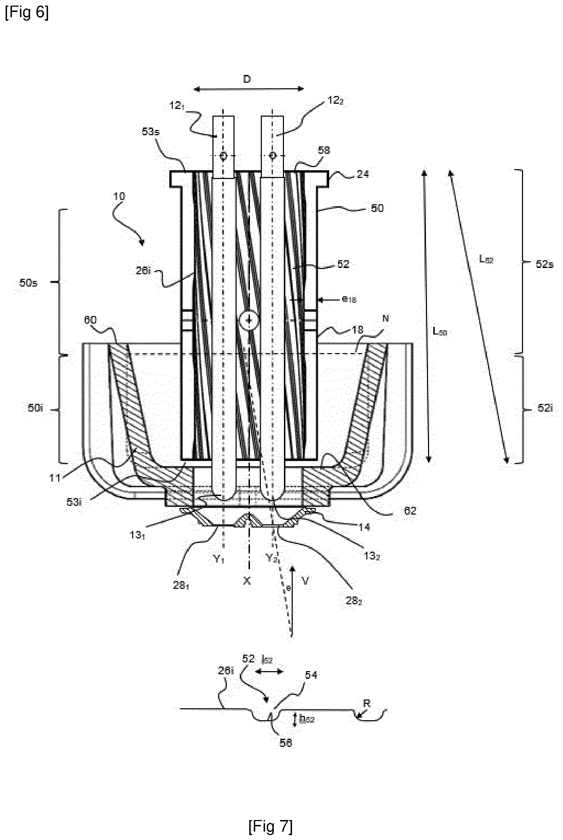

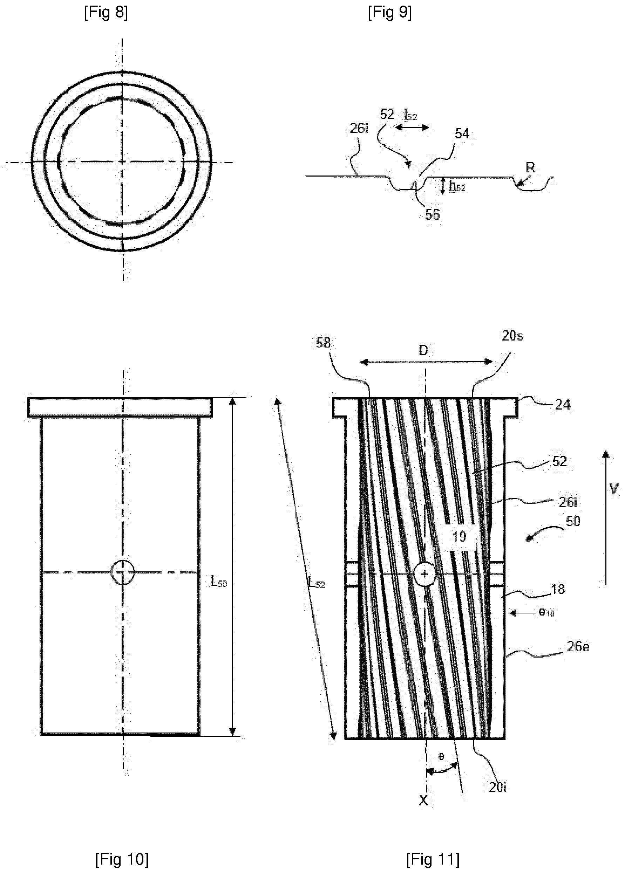

La figure 6 représente un plan de cette dernière chemise rainurée.

Dans chacun de ces ensembles cuvette d'avant-corps, la cuvette d'avant corps, les plongeurs, la rondelle d'écoulement et la chemise sont en un matériau fritté comportant 75,5% d'Al₂O₃, 12,5% de SiO₂ et 10,5% de ZrO₂.

Dans chacun des ensembles cuvette d'avant-corps, la longueur de la partie inférieure de la chemise est égale à 225 mm.

Les ensembles cuvette d'avant-corps sont utilisés dans les conditions suivantes :
- la chemise est en rotation à une vitesse égale à 2,5 tr/min,
- la température moyenne du verre à l'entrée de l'ensemble cuvette d'avant-corps est égale à 1160°C,
- le verre est un verre sodocalcique,
- la quantité de verre passant par la rondelle d'écoulement est égale à 115 T/j.

Le tableau 1 suivant résume les résultats obtenus.

**[Tableau 1]**

| | exemple comparatif 1 | exemple selon l'invention 2 |
|---|---|---|
| Durée de vie de la chemise | 7 mois | 14 mois |

Ces tests montrent que le ménagement de rainures sur la surface intérieure de la chemise permet de doubler la durée de vie de la chemise. Elle passe en effet de 7 mois à 14 mois.

La durée entre deux remplacements de chemise peut être augmentée en conséquence.

Comme cela apparaît clairement, l'invention fournit donc une solution pour limiter de manière considérable la fréquence de remplacement des chemises.

Bien entendu, l'invention n'est pas limitée aux modes de réalisation décrits et représentés, fournis à des fins illustratives seulement.

En particulier, la chemise peut être configurée pour recevoir plus de deux plongeurs. Elle peut comporter des variations de relief, et notamment des rainures sur sa surface extérieure et/ou un ou plusieurs trous radiaux.

## Revendications

1. Ensemble cuvette d'avant-corps d'un canal de distribution de verre, ledit ensemble comportant une unique chemise (50), au moins deux plongeurs (12₁ ; 12₂), et une unique rondelle d'écoulement (14) comportant des premier et deuxième orifices (28₁ ; 28₂), les plongeurs étant disposés, au moins partiellement, dans la chemise, plus de trois rainures (52) étant ménagées à la surface intérieure (26i) de ladite chemise et comportant chacune, dans une partie inférieure (50i) de la chemise destinée à être en contact avec du verre en fusion, une portion inférieure (52i) s'étendant sur plus de 10% de la longueur de ladite partie inférieure et présentant une longueur, mesurée en suivant la rainure, supérieure à 0,1 fois la longueur de ladite partie inférieure, la longueur de ladite partie inférieure (50i) étant mesurée selon l'axe (X) de ladite chemise.

2. Ensemble cuvette d'avant-corps selon la revendication précédente, dans lequel le nombre de dites rainures sur la surface intérieure (26i) est inférieur ou égal à 0,057*D + 4,05 et supérieur ou égal à 0,048*D - 2,43, D étant le diamètre de l'ouverture supérieure (58) de la chemise, en mm.

3. Ensemble cuvette d'avant-corps selon l'une quelconque des revendications précédentes, dans lequel la portion inférieure d'une rainure (52), de préférence une rainure quelconque, s'étend sur plus de 90% de la longueur de la partie inférieure (50i) de la chemise.

4. Ensemble cuvette d'avant-corps selon l'une quelconque des revendications précédentes, dans lequel une rainure (52), de préférence une rainure quelconque, s'étend sur plus de 2% de la longueur L₅₀ de la chemise.

5. Ensemble cuvette d'avant-corps selon la revendication précédente, dans lequel une rainure (52), de préférence une rainure quelconque, s'étend sur plus de 95% de la longueur L₅₀ de la chemise.

6. Ensemble cuvette d'avant-corps selon l'une quelconque des revendications précédentes, dans lequel la direction d'une rainure (52) en un point quelconque de ladite rainure forme, avec l'axe (X) de la chemise, un angle (θ) inférieur à 30°.

7. Ensemble cuvette d'avant-corps selon l'une quelconque des revendications précédentes, dans lequel le nombre de rainures (52) est supérieur à 8.

8. Ensemble cuvette d'avant-corps selon l'une quelconque des revendications précédentes, dans lequel, au moins dans la partie inférieure de la chemise,
- la profondeur minimale de chaque rainure (52) est supérieure à 2 mm et inférieure à 10 mm, la différence entre la profondeur maximale et la profondeur minimale d'une rainure (52) quelconque est inférieure à 4 mm, et/ou
- la largeur moyenne d'une rainure (52) quelconque est supérieure à 10 mm et inférieure à 30 mm, de préférence inférieure à 25 mm, et/ou
- le rapport de la profondeur sur la largeur (h₅₂/l₅₂) d'une rainure (52) est inférieur à 0,5, et/ou
- le rapport de l'aire totale des ouvertures (54) des rainures sur l'aire de la surface intérieure (26i) est supérieur à 20% et inférieur à 70%.

9. Chemise rainurée, conformée pour un ensemble cuvette d'avant-corps selon l'une quelconque des revendications précédentes.

10. Chemise rainurée selon la revendication immédiatement précédente, présentant un diamètre intérieur (D) supérieur à 12 cm.

11. Four de fabrication d'articles creux en verre, ledit four comportant un ensemble cuvette d'avant corps selon l'une quelconque des revendications 1 à 8.

12. Procédé de fabrication d'une chemise d'un ensemble cuvette d'avant-corps selon l'une quelconque des revendications 1 à 8, procédé dans lequel, pour augmenter la durée de vie de ladite chemise, on ménage, à la surface intérieure de ladite chemise, plus de trois rainures comportant chacune, dans une partie inférieure de la chemise destinée à être en contact avec du verre en fusion, une portion inférieure s'étendant sur plus de 10% de la longueur de ladite partie inférieure et présentant une longueur, mesurée en suivant la rainure, supérieure à 0,1 fois la longueur de ladite partie inférieure, la longueur de ladite partie inférieure étant mesurée selon l'axe (X) de ladite chemise.

## Patentansprüche

1. Ausgießeranordnung eines Glasverteilerkanals, wobei die Anordnung einen einzelnen Mantel (50), wenigstens zwei Plunger (12₁; 12₂) und eine einzelne Strömungsscheibe (14) mit einer ersten und einer zweiten Öffnung (28₁; 28₂) umfasst, wobei die Plunger wenigstens teilweise in dem Mantel angeordnet sind, wobei mehr als drei Rillen (52) an der Innenfläche (26i) des Mantels angeordnet sind und jeweils in einem unteren Abschnitt (50i) des Mantels, der dazu bestimmt ist, mit geschmolzenem Glas in Kontakt zu stehen, einen unteren Teilbereich (52i) aufweisen, der sich über mehr als 10 % der Länge des unteren Abschnitts erstreckt und eine entlang der Rille gemessene Länge aufweist, die mehr als das 0,1-fache der Länge des unteren Abschnitts beträgt, wobei die Länge des unteren Abschnitts (50i) entlang der Achse (X) des Mantels gemessen wird.

2. Ausgießeranordnung nach dem vorhergehenden Anspruch, wobei die Anzahl der Rillen auf der Innenfläche (26i) kleiner als oder gleich 0,057*D + 4,05 und größer als oder gleich 0,048*D - 2,43 ist, wobei D der Durchmesser der oberen Öffnung (58) des Mantels in mm ist.

3. Ausgießeranordnung nach einem der vorhergehenden Ansprüche, wobei sich der untere Teilbereich einer Rille (52), vorzugsweise einer beliebigen Rille, über mehr als 90 % der Länge des unteren Abschnitts (50i) des Mantels erstreckt.

4. Ausgießeranordnung nach einem der vorhergehenden Ansprüche, wobei sich eine Rille (52), vorzugsweise eine beliebige Rille, über mehr als 2 % der Länge L₅₀ des Mantels erstreckt.

5. Ausgießeranordnung nach dem vorhergehenden Anspruch, wobei sich eine Rille (52), vorzugsweise eine beliebige Rille, über mehr als 95 % der Länge L₅₀ des Mantels erstreckt.

6. Ausgießeranordnung nach einem der vorhergehenden Ansprüche, wobei die Richtung einer Rille (52) an einem beliebigen Punkt der Rille mit der Achse (X) des Mantels einen Winkel (θ) kleiner als 30° bildet.

7. Ausgießeranordnung nach einem der vorhergehenden Ansprüche, wobei die Anzahl von Rillen (52) größer als 8 ist.

8. Ausgießeranordnung nach einem der vorhergehenden Ansprüche, wobei wenigstens im unteren Abschnitt des Mantels,
- die minimale Tiefe jeder Rille (52) größer als 2 mm und kleiner als 10 mm ist, die Differenz zwischen der maximalen Tiefe und der minimalen Tiefe einer beliebigen Rille (52) kleiner als 4 mm ist, und/oder
- die mittlere Breite einer beliebigen Rille (52) größer als 10 mm und kleiner als 30 mm, vorzugsweise kleiner als 25 mm ist, und/oder
- das Verhältnis der Tiefe zur Breite (h₅₂/l₅₂) einer Rille (52) kleiner als 0,5 ist, und/oder
- das Verhältnis der Gesamtfläche der Öffnungen (54) der Rillen zur Fläche der Innenfläche (26i) größer als 20 % und kleiner als 70 % ist.

9. Gerillter Mantel, ausgebildet für eine Ausgießeranordnung nach einem der vorhergehenden Ansprüche.

10. Gerillter Mantel nach dem unmittelbar vorhergehenden Anspruch, aufweisend einen Innendurchmesser (D) größer als 12 cm.

11. Ofen zur Herstellung hohlförmiger Artikel aus Glas, wobei der Ofen eine Ausgießeranordnung nach einem der Ansprüche 1 bis 8 aufweist.

12. Verfahren zur Herstellung eines Mantels für eine Ausgießeranordnung nach einem der Ansprüche 1 bis 8, wobei bei dem Verfahren zur Erhöhung der Lebensdauer des Mantels an der Innenfläche des Mantels mehr als drei Rillen angeordnet werden, die jeweils in einem unteren Abschnitt des Mantels, der dazu bestimmt ist, mit geschmolzenem Glas in Kontakt zu stehen, ein unterer Teilbereich angeordnet wird, der sich über mehr als 10 % der Länge des unteren Abschnitts erstreckt und eine entlang der Rille gemessene Länge aufweist, die mehr als das 0,1-fache der Länge des unteren Abschnitts beträgt, wobei die Länge des unteren Abschnitts entlang der Achse (X) des Mantels gemessen wird.

## Claims

1. A forehearth tank assembly of a glass distribution channel, the assembly comprising a single liner (50), at least two plungers (12₁; 12₂), and a single flow washer (14) comprising first and second holes (28₁; 28₂), the plungers being arranged at least partially in the liner, more than three grooves (52) being provided in the inner surface (26i) of the liner and each comprising, in a lower portion (50i) of the liner which is intended to be in contact with molten glass, a lower portion (52i) which extends over more than 10% of the length of the lower portion and which has a length, measured along the groove, greater than 0.1 times the length of the lower portion, the length of the lower portion (50i) being measured along the axis (X) of the liner.

2. The forehearth tank assembly as claimed in the preceding claim, wherein the number of grooves on the inner surface (26i) is less than or equal to 0.057*D + 4.05 and greater than or equal to 0.048*D - 2.43, D being the diameter of the upper opening (58) of the liner in mm.

3. The forehearth tank assembly as claimed in one of the preceding claims, wherein the lower portion of a groove (52), preferably any groove, extends over more than 90% of the length of the lower portion (50i) of the liner.

4. The forehearth tank assembly as claimed in one of the preceding claims, wherein a groove (52), preferably any groove, extends over more than 2% of the length L₅₀ of the liner.

5. The forehearth tank assembly as claimed in one of the preceding claims, wherein a groove (52), preferably any groove, extends over more than 95% of the length L₅₀ of the liner.

6. The forehearth tank assembly as claimed in one of the preceding claims, wherein the direction of a groove (52) at any point of the groove forms, with the axis (X) of the liner, an angle (θ) less than 30°.

7. The forehearth tank assembly as claimed in one of the preceding claims, wherein the number of grooves (52) is greater than 8.

8. The forehearth tank assembly as claimed in one of the preceding claims, wherein, at least in the lower portion of the liner,
- the minimum depth of each groove (52) is greater than 2 mm and less than 10 mm, the difference between the maximum depth and the minimum depth of any groove (52) is less than 4 mm, and/or
- the mean width of any groove (52) is greater than 10 mm and less than 30 mm, preferably less than 25 mm, and/or
- the ratio of the depth to the width (h₅₂/l₅₂) of a groove (52) is less than 0.5, and/or
- the ratio of the total surface-area of the openings (54) of the grooves to the surface-area of the inner surface (26i) is greater than 20% and less than 70%.

9. A grooved liner which is shaped for a forehearth tank assembly as claimed in one of the preceding claims.

10. The grooved liner as claimed in the immediately preceding claim, having an inner diameter (D) greater than 12 cm.

11. A furnace for producing hollow glass articles, the furnace comprising a forehearth tank assembly as claimed in one of claims 1 to 8.

12. A method for producing a liner of a forehearth tank assembly as claimed in one of claims 1 to 8, in which method, in order to increase the service-life of the liner, there is provided, on the inner surface of the liner, more than three grooves which each comprise, in a lower portion of the liner which is intended to be in contact with the molten glass, a lower portion which extends over more than 10% of the length of the lower portion and which has a length, measured along the groove, greater than 0.1 times the length of the lower portion, the length of the lower portion being measured along the axis (X) of the liner.
